# EUROPEAN PATENT SPECIFICATION

(11) **EP 3 907 982 B1**
(45) Date of publication and mention of the grant of the patent: **06.03.2024**
(21) Application number: 20801763.2
(22) Date of filing: 07.05.2020
(51) Int. Cl.: H04N 23/71, H04N 23/74, H04N 7/18, H05B 45/12, H05B 45/325, H05B 47/125

(54) **CAMERA**
KAMERA
CAMÉRA

(30) Priority: 08.05.2019 CN 201910380492
(43) Date of publication of application: 10.11.2021
(73) Proprietor: Hangzhou Hikvision Digital Technology Co., Ltd., Hangzhou, Zhejiang 310051 (CN)
(72) Inventor: XUE, Haitao, Hangzhou, Zhejiang 310051 (CN)
(74) Representative: BRP Renaud & Partner mbB Rechtsanwälte Patentanwälte Steuerberater
(86) International application number: PCT/CN2020/089017
(87) International publication number: WO 2020/224619

(56) References cited:
- CN-A- 102 077 767
- CN-A- 102 573 239
- CN-A- 107 137 026
- CN-A- 108 020 524
- CN-A- 108 882 432
- CN-A- 108 965 733
- US-A1- 2001 038 753
- US-A1- 2004 036 010
- US-A1- 2010 149 357
- US-A1- 2018 041 681
- US-A1- 2018 048 819
- US-A1- 2018 359 442

## Description

The present application claims the priority to a Chinese patent application No. 201910380492.4, filed with the China National Intellectual Property Administration on May 8, 2019 and entitled "CAMERA".

### TECHNICAL FIELD

The application relates to the technical field of video monitoring, and in particular to a camera.

### BACKGROUND

In video monitoring applications, a light-supplementing lamp is generally used to supplement light for a camera in low-illumination environments such as at night, so as to improve the video monitoring effects at night. At present, the application scenes of video monitoring are developing in a diverse and refined direction, and the requirements in the camera light-supplementing technology are becoming higher and higher.

At present, common light-supplementing lamps are divided into two types: infrared light-supplementing lamp and white light-supplementing lamp, that is, infrared light-supplementing lamp or white light-supplementing lamp is used to supplement light, so as to satisfy monitoring requirement of low-illumination at night. However, for the above solutions, in which infrared or white light is used to supplement light, the color of the supplemented light is relatively monotonous. For the reflection of some special objects, the contrast of the image is poor, which does not satisfy the requirement of intelligent recognition of the image. Moreover, white light is visible light that the human eye can perceive, the use of white light to supplement light at night leads to poor concealment and will interfere with human eyes, and brings a safety hazard in scenes such as road monitoring.

US2018/0041681 A1 relates to a camera comprising red and bluish light emitting chips controlled by corresponding driving modules that determine the duty cycle of PWM signals based on the actual ambient light level.

US2010/0149357 A1 relates to a camera with lighting means wherein a stored look-up table is used for determining the duty cycle of a PWM control signal corresponding to an current ambient light.

In summary, the light-supplementing effect of the current camera is relatively poor.

### SUMMARY

An object of the embodiments in the present application is to provide a camera to improve the light-supplementing effect of the camera.

The invention is set out in the appended set of claims.

In the claimed solution, the mixed light supplementation is used, that is, the light-supplementing lamp supports various light-supplementing rays with different wavelengths, so that the PWM signals corresponding to light-supplementing rays with different wavelengths respectively are used to control the light-supplementing lamp to emit light according to the actual environmental requirements, thereby improving the light-supplementing effect of the camera.

### BRIEF DESCRIPTION OF THE DRAWINGS

In order to more clearly explain the technical solution in the embodiment of this application and the prior art, the drawings that need to be used in the description of the embodiments and the prior art will be briefly introduced below. It is obvious that the drawings described below are only some embodiments of the present application. Other drawings can be obtained by those skilled in the art based on the drawings without making any creative efforts.
Fig. 1 is a schematic structural diagram of a camera according to an embodiment of the present application;
Fig. 2 is a schematic structural diagram of a camera according to another embodiment of the present application;
Fig. 3 is a schematic diagram of a light-supplementing process of a camera according to an embodiment of the present application;
Fig. 4 is a schematic diagram of a light-supplementing process of a camera according to another embodiment of the present application;
Fig. 5 is a schematic diagram of a driving module of a camera according to an embodiment of the present application;
Fig. 6 is a schematic structural diagram of a light-supplementing lamp of a camera according to an embodiment of the present application;
Fig. 7 is a schematic structural diagram illustrating the package of a light-supplementing lamp of a camera according to an embodiment of the present application;
Fig. 8 is a schematic diagram of a red light emission band of a camera according to an embodiment of the present application;
Fig. 9 is a schematic diagram of a blue light emission band of a camera according to an embodiment of the present application;
Fig. 10 is a schematic diagram of a photosensitive sampling circuit of a camera according to an embodiment of the present application;

### DETAILED DESCRIPTION

In order to make the objects, technical solutions and advantages of the present application more clearly, the present application will be described in greater detail below with reference to the accompanying drawings and embodiments. It is obvious that the described embodiments are only some embodiments of the present application, and not all embodiments.

First, an application scene involved in the present application is introduced as follows.

The camera according to an embodiment of the present application is applied to a video monitoring scene, in which light-supplementing is carried out on the camera in low-illumination environments such as at night.

In the camera according to an embodiment of the present application, a light-supplementing lamp emits at least two light-supplementing rays with different wavelengths. By controlling various light-supplementing rays with different wavelengths emitted by the light-supplementing lamp, that is, by using mixed light supplementation, PWM signals corresponding to the light-supplementing rays with different wavelengths respectively are used to control the light-supplementing lamp to emit light according to the actual environmental requirements, so that the light-supplementing effect of the camera is better, thereby improving the monitoring quality of the camera.

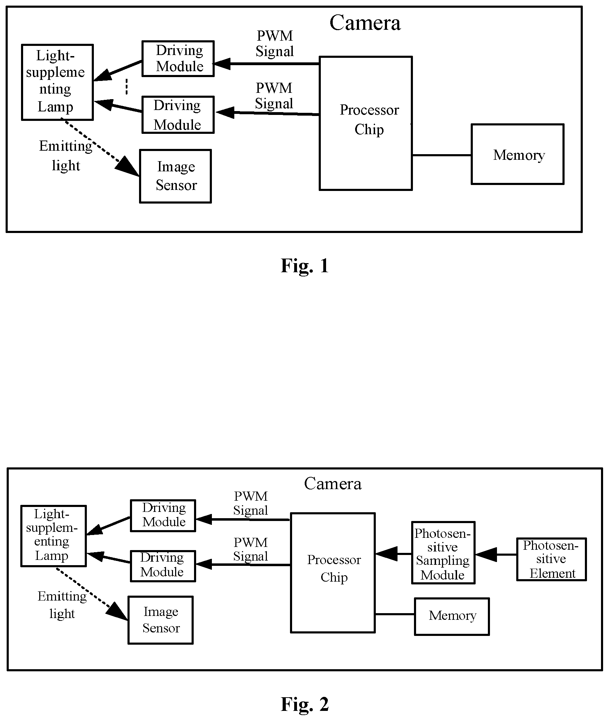

As shown in Fig. 1 and Fig. 2, the camera in the embodiment of the present application includes the following modules:
1. an image sensor, which is a device that converts an optical image into an electronic signal;
2. a processor chip, which may be configured for digital image processing, code compression and common external interface function control, and may be a System on Chip (abbreviated as SOC);
3. a light-supplementing lamp, such as an LED light-supplementing lamp, which emits at least two light-supplementing rays with different wavelengths, such as a double-chip lamp;
4. a driving module, which is referred to as a driving chip of the light-supplementing lamp and configured for controlling the light-supplementing lamp to emit light. Each light-emitting chip of a light-supplementing lamp corresponds to one driving module. As can be seen from Fig. 1, one light-supplementing lamp has a plurality of driving modules, each of which is configured for controlling the light-supplementing lamp to emit light-supplementing rays with one wavelength and each of which is controlled by one PWM signal. For example, a camera has 3 light-supplementing lamps, each of which may emit two kinds of light rays, then there are three groups of driving modules, each group of which contains two driving modules and controls one light-supplementing lamp. Each driving module is controlled by one PWM signal to drive the light-supplementing lamp to emit light-supplementing rays with different wavelengths. The PWM signal is configured for adjusting current output by the driving module, so as to control the brightness of the light-supplementing lamp.
5. a photosensitive sampling module, which is configured for digital sampling of a photosensitive signal to obtain a sampling signal; and
6. a photosensitive element, which is a sensor that outputs different analog levels according to the change in the ray intensity.

The light-supplementing lamp emits at least two light-supplementing rays with different wavelengths, such as a red-blue mixed light-supplementing lamp integrated with a red light-emitting chip and a blue light-emitting chip.

The technical solution of the present application will be described in detail with specific embodiments. These several specific embodiments below may be combined with each other, and the same or similar concepts or processes may not be repeatedly described in some embodiments.

As shown in Fig. 1, the camera includes:
a light-supplementing lamp provided with at least two light-emitting chips and configured for emitting at least two light-supplementing rays with different wavelengths; wherein each of the light-emitting chips is configured for connecting to a corresponding driving module, which is configured for receiving PWM signals sent by a processor chip so as to drive a corresponding light-emitting chip to emit light-supplementing rays;
an image sensor configured for sensing the light-supplementing rays emitted by the light-supplementing lamp and generating an image;
a memory configured for storing a preset data table, wherein the data table indicates a correspondence between a preset brightness value and the at least two PWM signals; and
the processor chip configured for acquiring a current image from the image sensor and calculating an actual brightness value of the current image; determining a first preset brightness value and at least two new PWM signals corresponding to the first preset brightness value in the data table based on the actual brightness value; and outputting the at least two new PWM signals to the driving modules to drive the light-supplementing lamp to emit the light-supplementing rays.

Specifically, the light-supplementing lamp is provided with at least two light-emitting chips. In other words, two light-emitting chips are arranged inside the light-supplementing lamp, and respectively emit light-supplementing rays with different wavelengths, for example, the rays with at least two colors, such as red light and blue light, or infrared light and blue light with different wavelengths. The light-supplementing lamp may be an LED lamp. The driving module is connected with the light-emitting chip in a one-to-one manner, namely one light-emitting chip is connected to one corresponding driving module. The driving module receives the PWM signal sent by the processor chip, and generate an electric signal for driving the light-emitting chip to emit a light-supplementing ray based on the PWM signal. The driving module sends the generated electric signal to the correspondingly connected light-emitting chip to drive the light-emitting chip to emit the light-supplementing ray.

The data table indicates the correspondence between the preset brightness value and the at least two PWM signals, so the preset brightness value and the corresponding at least two PWM signals may be directly recorded in the data table, and the preset brightness value and the duty ratio of the corresponding at least two PWM signals may also be recorded in the data table.

The processor chip may specifically output at least two new PWM signals to the driving module through a digital I/O port, where the PWM signals may be considered as digital signals, and the processor chip may also output at least two new PWM signals to the driving module through a clock interface, an analog signal interface and the like. At this time, the PWM signals may be considered as high/low level electrical signals, analog signals, etc.

Further, as shown in Fig. 2, the camera further includes a photosensitive sampling module and a photosensitive element that are connected in sequence. Wherein the photosensitive sampling module is connected to an input interface of the processor chip and is configured for sampling according to a level signal output by the photosensitive element to obtain a sampling signal.

The processor chip is further configured for determining whether the light-supplementing lamp needs to be turned on according to the sampling signal output by the photosensitive sampling module; and if it is determined that the light-supplementing lamp needs to be turned on, outputting PWM signals to the driving modules corresponding to the light-emitting chips respectively.

During the operation of the camera, it needs to be determined firstly whether to turn on the light-supplementing lamp, that is, it needs to be determined whether to turn on the light-supplementing lamp according to the change of external ambient light, which may be determined based on the sampling signal output by the photosensitive sampling module in the camera after sampling the level signal output by the photosensitive element. Specifically, the level of the sampling signal of the photosensitive sampling module is compared with a preset level threshold value, and if the level of the sampling signal of the photosensitive sampling module is greater than the preset level threshold value, it is indicated that the brightness of external ambient light does not satisfy the requirement, then it is determined that the light-supplementing lamp needs to be turned on.

After it is determined that the light-supplementing lamp needs to be turned on, the PWM signals corresponding to the various light-supplementing rays with different wavelengths are output to corresponding driving modules, and then the driving modules control the light-supplementing lamp to emit light according to the PWM signals, wherein the duty ratio of the PWM signal is a preset duty ratio or a duty ratio adjusted last time.

The image sensor senses light-supplementing rays emitted by the light-supplementing lamp and obtains a current image, then determines an actual brightness value of the current image through the processor chip, and determines whether to adjust light-supplementing brightness of the light-supplementing lamp according to the actual brightness value.

The method in which the processor chip determines a first preset brightness value specifically includes: looking up the data table to determine the first preset brightness value in a data table. Wherein a deviation between the first preset brightness value and the actual brightness value is less than a first preset threshold value.

Specifically, the first preset brightness value corresponding to the actual brightness value is determined by looking up Table 1 according to the actual brightness value. That is, a brightness value closest to the actual brightness value is determined by looking up Table 1 (that is, the deviation is less than the first preset threshold value). For example, if the actual brightness value is a which is closest to B3 in Table 1, then B3 is determined as the first preset brightness value, and then the duty ratios of the PWM signals corresponding to the first preset brightness value are determined, which are respectively 80% for red light and 90% for blue light. The two PWM signals are output respectively to two driving modules, which control the corresponding light-emitting chips to emit different light-supplementing rays.

**Table 1 Data Table**

| Colo r (s) | Red light | | | | | | | | | | | |
|---|---|---|---|---|---|---|---|---|---|---|---|---|
| | Duty ratio | 100 % | 90 % | 80 % | 70 % | 60 % | 50 % | 40 % | 30 % | 20 % | 10 % | 0% |
| Blue light | 100 % | A1 | A2 | A3 | A4 | A5 | A6 | A7 | A8 | A9 | A10 | A1 1 |
| | 90% | B1 | B2 | B3 | B4 | B5 | B6 | B7 | B8 | B9 | B10 | B1 1 |
| | 80% | C1 | C2 | C3 | C4 | C5 | C6 | C7 | C8 | C9 | C10 | C1 1 |
| | 70% | D1 | D2 | D3 | D4 | D5 | D6 | D7 | D8 | D9 | D10 | D1 1 |
| | 60% | E1 | E2 | E3 | E4 | E5 | E6 | E7 | E8 | E9 | E10 | E11 |
| | 50% | F1 | F2 | F3 | F4 | F5 | F6 | F7 | F8 | F9 | F10 | F11 |
| | 40% | G1 | G2 | G3 | G4 | G5 | G6 | G7 | G8 | G9 | G10 | G1 1 |
| | 30% | H1 | H2 | H3 | H4 | H5 | H6 | H7 | H8 | H9 | H10 | H1 1 |
| | 20% | I1 | I2 | I3 | I4 | I5 | I6 | I7 | I8 | I9 | I10 | I11 |
| | 10% | J1 | J2 | J3 | J4 | J5 | J6 | J7 | J8 | J9 | J10 | J11 |
| | 0% | K1 | K2 | K3 | K4 | K5 | K6 | K7 | K8 | K9 | K10 | K11 |

Wherein, the brightness value in Table 1 may be data obtained when an aperture size is set as a fixed value, and different duty ratios of the light-supplementing rays with different wavelengths respectively correspond to different brightness values, such as A1 and A2.

If there is no need to adjust the light-supplementing brightness of the light-supplementing lamp, then the light-supplementing control is completed.

Further, the processor chip is further configured for:
looking up the data table based on the PWM signals corresponding to the current image to determine a second preset brightness value in the data table;
determining the first preset brightness value and at least two new PWM signals corresponding to the first preset brightness value when a deviation between the actual brightness value and the second preset brightness value is greater than a second preset threshold value.

In the embodiment of the present application, one driving module is connected with one light-emitting chip, and after receiving the PWM signals sent by the processor chip, the driving module correspondingly drives the light-emitting chip connected with the driving module to emit light-supplementing ray. It can be seen that there is a correspondence among the light-emitting chip, the driving module, the PWM signal and the light-supplementing rays. Moreover, the image is generated by sensing the light-supplementing rays. Therefore, there is also a correspondence among the generated image and the light-emitting chip, the driving module, the PWM signal, and the light-supplementing rays.

Specifically, if the actual brightness value of the current image is a, a duty ratio of a PWM signal of one kind of light-supplementing ray corresponding to the current image is 70%, and a duty ratio of a PWM signal of another kind of light-supplementing ray is 80%, a corresponding brightness value, i.e., a second preset brightness value C4, is determined according to the duty ratio of 70% corresponding to the one kind of light-supplementing ray and the duty ratio of 80 % corresponding to the another kind of light-supplementing ray in the Table 1. If the deviation between the actual brightness value a and the second preset brightness value C4 is great and is greater than the second preset threshold value, it is determined that the light-supplementing brightness of the light-supplementing lamp needs to be adjusted, i.e., it needs to perform the step of determining the first preset brightness value and at least two new PWM signals corresponding to the first preset brightness value.

Further, the processor chip is further configured for:
not generating new PWM signals when the deviation between the actual brightness value of the current image and the second preset brightness value is less than or equal to the second preset threshold value.

Specifically, if the deviation between the actual brightness value of the current image and the second preset brightness value is small and is less than or equal to the second preset threshold value, then the light-supplementing brightness of the light-supplementing lamp is not adjusted, that is, no new PWM signals will be generated. The first preset threshold value and the second preset threshold value may be determined according to actual conditions.

In another embodiment of the present application, whether to adjust the light-supplementing brightness of the light-supplementing lamp may be determined by using an Image Signal Processor (abbreviated as ISP) algorithm according to the actual brightness value.

Further, the processor chip is further configured for controlling the light-supplementing lamp to be turned off if the level of the sampling signal output by the photosensitive sampling module is less than a preset level threshold value.

Specifically, the photosensitive element and the photosensitive sampling module in the camera sample the brightness of external rays in real time, and if the level of the sampling signal is less than the preset level threshold value, which indicates that the brightness of the external ambient light satisfies the requirement, then the light-supplementing lamp is turned off, and light-supplementing is not performed.

The camera according to the embodiment of the present application includes a light-supplementing lamp, at least two driving modules, an image sensor, a memory and a processor chip. The light-supplementing lamp is provided with at least two light-emitting chips and configured for emitting at least two light-supplementing rays with different wavelengths. Wherein each of the light-emitting chips is configured for connecting to a corresponding driving module, which is configured for receiving PWM signal sent by the processor chip so as to drive a corresponding light-emitting chip to emit light-supplementing rays. The image sensor is configured for sensing the light-supplementing rays emitted by the light-supplementing lamp and generating an image. The memory is configured for storing a preset data table, wherein the data table indicates a correspondence between a preset brightness value and at least two PWM signals. The processor chip is configured for: acquiring a current image from the image sensor and calculating an actual brightness value of the current image; determining a first preset brightness value and at least two new PWM signals corresponding to the first preset brightness value in the data table based on the actual brightness value; and outputting the at least two new PWM signals to the driving modules to drive the light-supplementing lamp to emit the light-supplementing rays. In the above solution, the mixed light supplementation is used, that is, the light-supplementing lamp supports various light-supplementing rays with different wavelengths, so that the PWM signals corresponding to light-supplementing rays with different wavelengths can be used respectively to control the light-supplementing lamp to emit light according to the actual environmental requirements, thereby improving the light-supplementing effect of the camera and the monitoring quality of the camera.

On the basis of the above embodiment, determining the at least two new PWM signals by the processor chip includes:
looking up the data table based on the first preset brightness value and determining a duty ratio of a new first PWM signal and a duty ratio of a new second PWM signal corresponding to the first preset brightness value.

Specifically, as shown in Table 1, for example, the first light-supplementing ray is red light, the second light-supplementing ray is blue light, the table is looked up according to the actual brightness value of the current image, it is determined that the first preset brightness value is C6, the duty ratio of the new PWM signal corresponding to the first light-supplementing ray is 50%, and the duty ratio of the new PWM signal corresponding to the second light-supplementing ray is 80%.

Further, when outputting the at least two new PWM signals to the driving modules, the processing chip may be specifically configured for:
if the duty ratio of the first PWM signal is different from the duty ratio of the current PWM signal corresponding to the first light-supplementing ray, outputting the first PWM signal to a driving module corresponding to a light-emitting chip which emits the first light-supplementing ray; and
if the duty ratio of the second PWM signal is different from the duty ratio of the current PWM signal corresponding to the second light-supplementing ray, outputting the second PWM signal to a driving module corresponding to a light-emitting chip which emits the second light-supplementing ray.

Specifically, if the duty ratio of the new first PWM signal corresponding to the first light-supplementing ray is the same as the current duty ratio, then the driving module is still driven according to the current PWM signal to control the light-emitting chip to emit light; and if the duty ratio of the new first PWM signal corresponding to the first light-supplementing ray is different from the current duty ratio, then the driving module is driven according to the first PWM signal to control the light-emitting chip to emit light. The principle is similar for the second light-supplementing ray.

For example, the first light-supplementing ray is red light, the second light-supplementing ray is blue light, the table is looked up according to the actual brightness value of the current image, it is determined that first preset brightness value is C6, the duty ratio of the new PWM signal corresponding to the first light-supplementing ray is 50%, and the duty ratio of the new PWM signal corresponding to the second light-supplementing ray is 80%. The duty ratios of the current PWM signals of the current image are 70% and 80% respectively, so that only the PWM signal corresponding to the second light-supplementing ray needs to be adjusted. For the first light-supplementing ray, the driving module is still driven with the current PWM signal, and controls the corresponding light-emitting chip to emit light.

For example, if the actual brightness value is too large and the image subjects to overexposure, the PWM signals corresponding to different light-supplementing rays are determined according to the first preset brightness value corresponding to the actual brightness value, so that the rays emitted by the light-supplementing lamp are controlled for light exposure according to the PWM signals corresponding to the different light-supplementing rays, which prevents image from overexposure.

In the present embodiment, the light-supplementing lamp is controlled to emit light through the duty ratio parameters of the various light-supplementing rays with different wavelengths, so that the PWM signals corresponding to different rays respectively are used to control the light-supplementing lamp to emit light according to the actual environmental requirements, thereby the light-supplementing effect of the camera is better, which improves the monitoring quality of the camera, and satisfies the requirement of intelligent recognition.

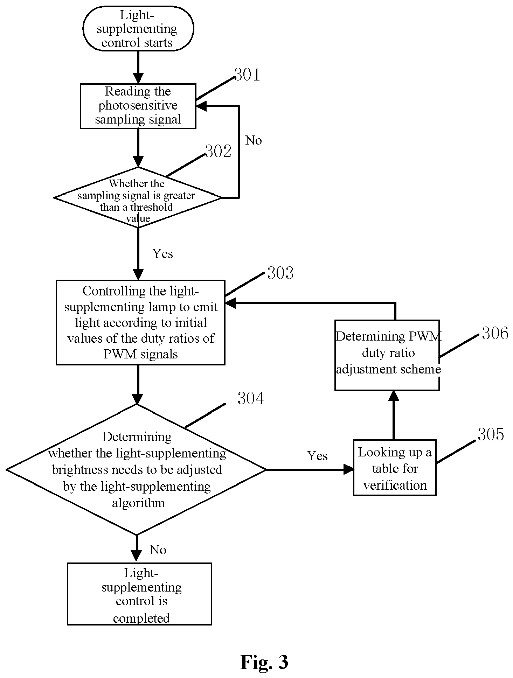

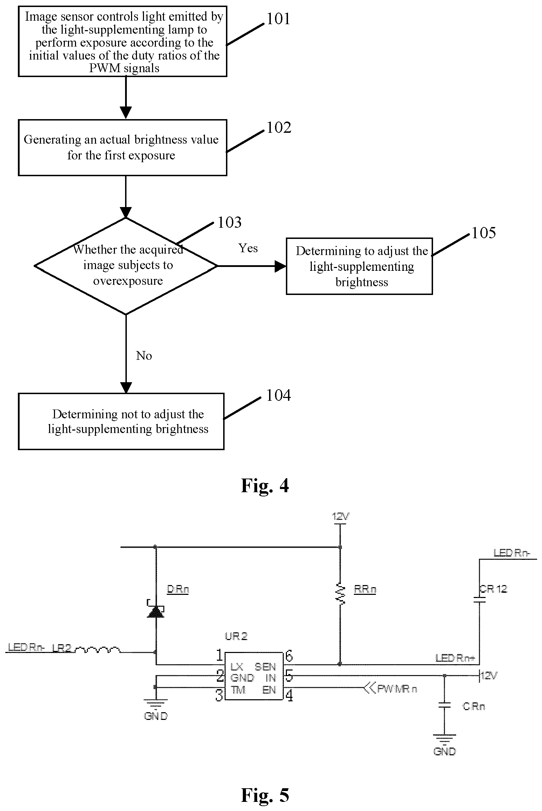

In an embodiment of the present application, as shown in Fig. 3, the light-supplementing control starts. At step 301, a photosensitive sampling signal is read, i.e., the processor chip reads the sampling signal output by the photosensitive sampling module. At step 302, it is determined whether the sampling signal is greater than a threshold value, if so, execute step 303, otherwise return to and execute step 301. At step 303, the light-supplementing lamp is controlled to emit light according to initial values of the duty ratios of the PWM signals. At step 304, a light-supplementing algorithm is used to determine whether the light-supplementing brightness needs to be adjusted, references are made to the above embodiments or the embodiment shown in Fig. 4 for its specific process. If it is determined that the light-supplementing brightness needs to be adjusted, step 305 is executed, and otherwise, the light-supplementing control is completed. At step 305, a table is looked up for verification. At step 306, a PWM duty ratio adjustment scheme is determined. For example, duty ratios of PWM signals corresponding to various light-supplementing rays with different wavelengths that correspond to the actual brightness value are determined according to the correspondence in Table 1 as adjusted duty ratios of the PWM signals corresponding to the various light-supplementing rays with different wavelengths.

In another embodiment of the present application, as shown in Fig. 4, at step 101, the image sensor controls light emitted by the light-supplementing lamp to perform exposure according to the initial values of the duty ratios of the PWM signals, and acquires an image. At step 102, an actual brightness value for the first exposure is generated, that is, the actual brightness value of the current image acquired by the image sensor is determined. At step 103, it is determined whether the acquired image subjects to overexposure, e.g., according to the ISP algorithm. If it is determined that the image subjects to overexposure, step 105 is executed, i.e., it is determined to adjust the light-supplementing brightness, and then steps 305-306 in Fig. 3 are executed. Otherwise, step 104 is executed, i.e., it is determined not to adjust the light-supplementing brightness, and the light-supplementing control is completed.

On the basis of the above embodiment, the driving module further includes:
a driving chip, a first sampling resistor and a power source;
wherein, a first port (pin 4) of the driving chip is connected to an output port of the processor chip;
a second port (pin 5) of the driving chip is connected to the power source;
a third port (pin 6) of the driving chip is connected to a first end of the first sampling resistor and the light-supplementing lamp respectively; and a second end of the first sampling resistor is connected to the power source.

The driving chip is specifically configured for:
outputting a current signal according to the first sampling resistor and a PWM signal corresponding to one kind of ray output by the processor chip, wherein the current signal is configured for controlling the light-supplementing lamp to emit a light-supplementing ray with one wavelength.

Further, the driving module further includes:
an inductor, a freewheeling diode, a first capacitor and a second capacitor;
a fourth port (pin 1) of the driving chip is connected to a first end of the inductor and a first end of the freewheeling diode respectively; a second end of the inductor is connected to the light-supplementing lamp; a second end of the freewheeling diode is connected to the power source;
the second port (pin 5) of the driving chip is also connected to a first end of the first capacitor, and a second end of the first capacitor is grounded; and
a first branch and a second branch of the third port (pin 6) of the driving chip are respectively connected to two ends of the second capacitor.

Specifically, Fig. 5 shows a schematic diagram of the driving module, the driving circuit module is introduced as follows.

UR2 is a driving chip, for example, an LED constant current driving chip which, when supplied with power, may output a current value that is set based on the first sampling resistor RRn, wherein the output current is constant, and the driving chip may be adjusted according to the load change to achieve a constant current output.

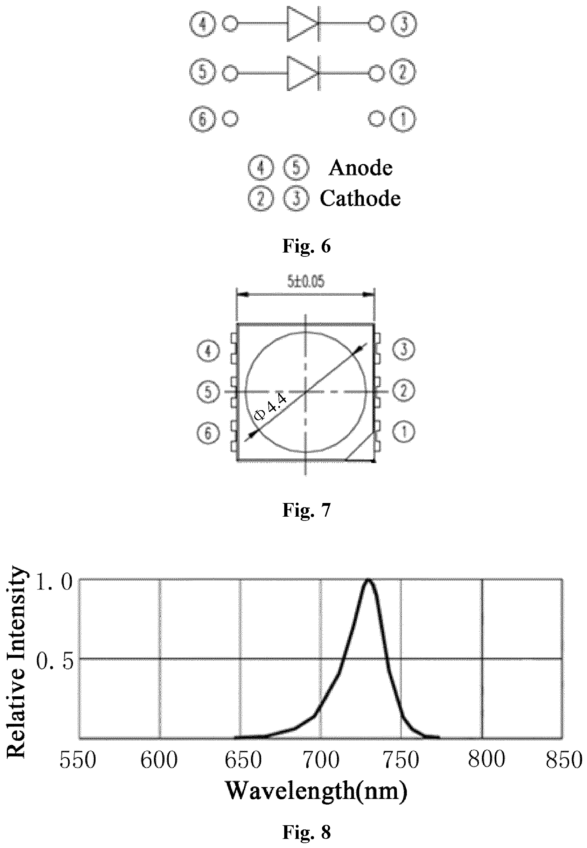

The driving chip may include 6 pins, each of which has the following meaning:
pin 1 (LX) is an inductor pin connected to inductor LR2 for rectified output, and DRn is a freewheeling diode for inductive rectified negative cycle energy supply. Ends 1, 2 are respectively an anode and a cathode.
Pin 2 (GND) is a ground pin.
Pin 3 (TM) is a test mode pin, which may be directly grounded in practical applications.
Pin 4 (EN) is an enabling and light adjustment pin, which may be directly pulled up to enable the chip; PWMRn signal in Fig. 7 is output from the processor chip to the driving chip for light adjustment control. The adjusted maximum current value is the maximum value set by the first sampling resistor. For example, if the duty ratios of the PWM signals are 20%, the current output by the driving chip is 20% of the maximum value set by the first sampling resistor.
Pin 5 (IN) is a power input pin, which can be connected to a DC 12V power source, and the first capacitor CRn is the input capacitor of the power source for power source filtering.
Pin 6 (SEN) is a current sampling pin, which is connected to the first sampling resistor RRn, and an output current value is calculated through the first sampling resistor, wherein the current value is a maximum output current value set by hardware, and a second capacitor CR12 is an output capacitor that performs filtering of the output driving current signal.

A light-supplementing lamp (an anode and a cathode of a LED lamp corresponding to the light-supplementing ray with one wavelength) is connected between the driving outputs LEDRn+ and LEDRn- for driving and lightening, the brightness of the light-supplementing lamp is changed with the output current; and the output current is changed with the high level time change of the PWMRn signal of the processor chip, that is, the duty ratio change.

Furthermore, the light-supplementing lamp includes at least two LED lamps, each of which includes one light-emitting chip. The two ends of each LED lamp are respectively connected to the first branch and the second branch of the third port of the corresponding driving chip.

As shown in Fig. 6, the light-supplementing lamp includes two LED lamps respectively emitting red light and blue light, pin ① and pin ⑥ are configured for dissipating heat, pins ② and ③ are cathodes, and pins ④ and ⑤ are anodes.

Further, as shown in Fig. 7, the light-supplementing lamp further includes a packaging structure;
the at least two LED lamps are arranged in the packaging structure, and each of the LED lamps corresponds to one driving module;
the packaging structure includes at least two first interfaces and at least two second interfaces;
a first end of a first interface is connected to the anode of a corresponding LED lamp, and a first end of a second interface is connected to the cathode of the corresponding LED lamp;
a second end of the first interface is connected to the first branch of the third port of the corresponding driving chip, and a second end of the second interface is connected to the second branch of the third port of the corresponding driving chip.

The packaging structure further includes at least one third interface for dissipating heat.

Specifically, for the packaging structure of the light-supplementing lamp as shown in Fig. 7, the width of the packaging structure in Fig. 7 is 5±0.05mm, the diameter φ of the light-supplementing lamp is 4.4mm. The size in Fig. 7 is only an example, which is not limited in the present application. ① and ⑥ are the third interfaces for dissipating heat, ④ and ⑤ are the first interfaces, ② and ③ are the second interfaces, or ② and ③ are the first interfaces, ④ and ⑤ are the second interfaces.

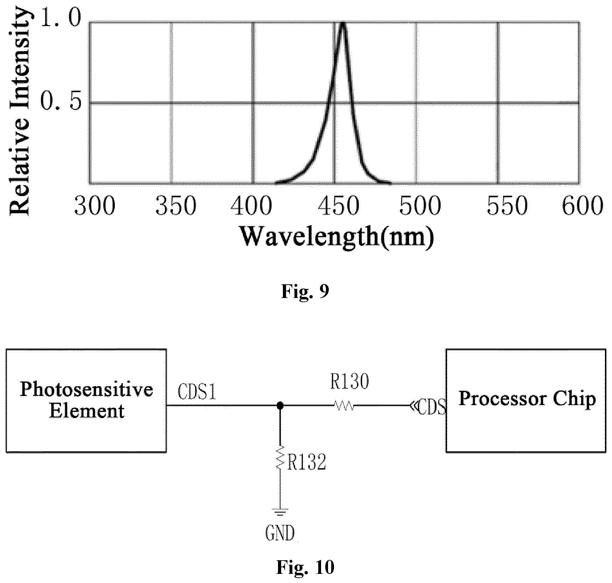

As shown in Fig. 8, the center wavelength of red light is 730nm, and the effective spectral bandwidths at both ends are respectively about 50nm. As shown in Fig. 9, the center wavelength of blue light is 460nm, and the effective spectral bandwidths at both ends are respectively about 30 nm.

Further, the photosensitive sampling module includes:
a second sampling resistor and a third sampling resistor;
a first end of the second sampling resistor is connected to an output end of the photosensitive element and a first end of the third sampling resistor respectively; a second end of the second sampling resistor is grounded;
a second end of the third sampling resistor is used as an output end of the photosensitive sampling module and is connected to the input interface of the processor chip.

Specifically, as shown in Fig. 10, CDS1 signal is a signal output by the photosensitive element, the level of the signal changes with the photosensitive brightness, the second sampling resistor R132 and the third sampling resistor R130 perform resistance sampling. CDS is a sampling input interface of the processor chip, and it is determined according to the level change of the input sampling signal whether the sampling signal reaches a threshold value satisfying a condition (i.e., a threshold value for turning on or off the light-supplementing lamp), so as to control the light-supplementing lamp to turn on or off.

An embodiment of the present application may further provide a video monitoring system, which includes the camera according to any one of the above embodiments.

The video monitoring system according to this embodiment has similar implementation principle and technical effect, which are not described herein again.

The following embodiments regarding a camera light-supplementing circuit are not according to the invention and are present for illustration purposes only.

An embodiment of the present application further provides a camera light-supplementing circuit, including:
at least two LED lamps, at least one of which is configured for emitting red light and the other of which is configured for emitting blue light, wherein the red light and the blue light are used for supplementing light for the camera;
a photosensitive sensor assembly for generating a level sampling signal of ambient light;
a processor electrically connected to the photosensitive sensor assembly and is configured for determining to turn on the at least two LED lamps when determining that the level sampling signal is higher than a preset value, and generating at least two PWM signals in response to the at least two LED lamps being turned on;
a driving circuit electrically connected to the processor and configured for driving the at least two LED lamps based on the received at least two PWM signals.

Optionally, the photosensitive sensor assembly includes:
a light sensitive element for sensing ambient light;
a photosensitive sampling circuit electrically connected to the photosensitive element and is configured for sampling a level signal output by the photosensitive element to generate a level sampling signal.

Optionally, the photosensitive sampling circuit includes:
a second sampling resistor and a third sampling resistor;
a first end of the second sampling resistor is connected to an output end of the photosensitive element and a first end of the third sampling resistor respectively; a second end of the second sampling resistor is grounded; and
a second end of the third sampling resistor is used as an output end of the photosensitive sampling circuit and is connected to the input interface of the processor.

Optionally, the driving circuit includes a driving chip, a first sampling resistor and a power source;
a first port of the driving chip is connected to an output port of the processor;
a second port of the driving chip is connected to the power source;
a third port of the driving chip is connected to a first end of the first sampling resistor and a light-emitting chip in any one of the LED lamps respectively; a second end of the first sampling resistor is connected to the power source; and
the driving chip is configured for outputting a current signal to the connected light-emitting chip according to the first sampling resistor and a PWM signal output by the processor so as to control the connected light-emitting chip to emit red light or blue light.

Optionally, the driving circuit further includes an inductor, a freewheeling diode, a first capacitor and a second capacitor;
a fourth port of the driving chip is connected to a first end of the inductor and a first end of the freewheeling diode respectively; a second end of the inductor is connected to the LED lamp; a second end of the freewheeling diode is connected to the power source;
the second port of the driving chip is also connected to a first end of the first capacitor, and a second end of the first capacitor is grounded; and
a first branch and a second branch of the third port of the driving chip are respectively connected to two ends of the second capacitor.

Optionally, each of the at least two LED light-supplementing lamps includes one light-emitting chip, two ends of each of LED lamps are respectively connected to the first branch and the second branch of the third port of the corresponding driving chip.

Optionally, the at least two LED lamps are arranged in a packaging structure; one of the LED lamps corresponds to one driving module;
the packaging structure includes at least two first interfaces and at least two second interfaces;
a first end of the first interface is connected to an anode of the corresponding LED lamp, and a first end of the second interface is connected to a cathode of the corresponding LED lamp; and
a second end of the first interface is connected to the first branch of the third port of the corresponding driving chip; and a second end of the second interface is connected to the second branch of the third port of the corresponding driving chip.

Optionally, the packaging structure further includes at least one third interface for dissipating heat.

The camera light-supplementing circuit according to this embodiment of the present application has similar implementation principle and technical effect to the camera in the above embodiment, which are not described herein again.

An embodiment of the present application further provides a camera, including a light-supplementing lamp, at least two driving modules, an image sensor, a memory and a processor chip;
the light-supplementing lamp includes at least two light-emitting chips, each of which is connected to an output port of a corresponding driving module, and is configured for emitting a light-supplementing ray, and wavelengths of the light-supplementing rays emitted by the light-emitting chips are different;
an input port of the driving module is connected to an output port of the processor chip, and the driving module is configured for receiving a PWM signal sent by the processor chip and driving the connected light-emitting chip to emit a light-supplementing ray based on the PWM signal;
the image sensor is configured for sensing the light-supplementing rays emitted by the light-supplementing lamp and generating an image;
the memory is configured for storing a preset data table, wherein the data table indicates a correspondence between a preset brightness value and at least two PWM signals; and
the image sensor and the memory are connected to the input port of the processor chip, the processor chip is configured for acquiring a current image from the image sensor and acquiring the data table from the memory, if it is determined that the light-supplementing brightness of the light-supplementing lamp needs to be adjusted, looking up the data table based on an actual brightness value of the current image to determine corresponding at least two new PWM signals, and outputting the at least two new PWM signals to the corresponding driving modules respectively.

Whether the light-supplementing lamp needs to be adjusted is determined according to the actual brightness value. Specifically, the image sensor looks up the data table to find a second preset brightness value based on the respective PWM signals corresponding to light-emitting chips that correspond to the current image; and if a deviation between the actual brightness value and the second preset brightness value is greater than a second preset threshold value, it is determined that the light-supplementing brightness of the light-supplementing lamp needs to be adjusted.

As described above, the processor chip has the functions of looking up a table, determining whether the light-supplementing brightness of the light-supplementing lamp needs to be adjusted, and the like. The processor chip can find at least two new PWM signals, and output the new PWM signals to the driving modules, and then the driving modules can drive the connected light-emitting chips to emit light-supplementing rays based on the PWM signals.

Specifically, how the processor chip implements the functions of looking up the table, determining whether the light-supplementing brightness of the light-supplementing lamp needs to be adjusted and the like is described in detail in the embodiments shown in Fig. 1 to Fig. 10, and will not be described herein again.

Optionally, the driving module includes a driving chip, a first sampling resistor and a power source;
a first port of the driving chip is connected to the output port of the processor chip;
a second port of the driving chip is connected to the power source;
a third port of the driving chip is connected to a first end of the first sampling resistor and one light-emitting chip in the light-supplementing lamp respectively; a second end of the first sampling resistor is connected to the power source; and
the driving chip is configured for outputting a current signal to the connected light-emitting chip according to the first sampling resistor and a PWM signal output by the processor chip so as to control the connected light-emitting chip to emit a light-supplementing ray with one wavelength.

Optionally, the driving module further includes an inductor, a freewheeling diode, a first capacitor and a second capacitor;
a fourth port of the driving chip is connected to a first end of the inductor and a first end of the freewheeling diode respectively; a second end of the inductor is connected to the light-supplementing lamp; a second end of the freewheeling diode is connected to the power source;
the second port of the driving chip is also connected to a first end of the first capacitor, and a second end of the first capacitor is grounded;
a first branch and a second branch of the third port of the driving chip are respectively connected to two ends of the second capacitor.

Optionally, the light-supplementing lamp includes at least two LED lamps, each of which includes one light-emitting chip, wherein two ends of each of the LED lamps are respectively connected to the first branch and the second branch of the third port of the corresponding driving chip.

Optionally, the light-supplementing lamp further includes a packaging structure;
the at least two LED lamps are arranged in the packaging structure; each of the LED lamps corresponds to one driving module;
the packaging structure includes at least two first interfaces and at least two second interfaces;
a first end of the first interface is connected to an anode of the corresponding LED lamp, and a first end of the second interface is connected to a cathode of the corresponding LED lamp;
a second end of the first interface is connected to the first branch of the third port of the corresponding driving chip; and a second end of the second interface is connected to the second branch of the third port of the corresponding driving chip.

Optionally, the packaging structure further includes at least one third interface for dissipating heat.

Optionally, the camera further includes a photosensitive sampling module and a photosensitive element that are connected in sequence;
the photosensitive sampling module is connected to an input interface of the processor chip;
the photosensitive sampling module is configured for sampling according to a level signal output by the photosensitive element to obtain a sampling signal;
the processor chip is further configured for determining whether the light-supplementing lamp needs to be turned on according to the sampling signal output by the photosensitive sampling module; if it is determined that the light-supplementing lamp needs to be turned on, outputting PWM signals to the driving modules corresponding to the light-emitting chips respectively.

Optionally, the photosensitive sampling module includes a second sampling resistor and a third sampling resistor;
a first end of the second sampling resistor is connected to an output end of the photosensitive element and a first end of the third sampling resistor respectively; a second end of the second sampling resistor is grounded;
a second end of the third sampling resistor is used as an output end of the photosensitive sampling module and is connected to the input interface of the processor chip.

Optionally, the at least two light-supplementing rays with different wavelengths include red light and blue light.

In the embodiment of the present application, the camera has the similar implementation principle and technical effect to the camera according to the embodiments shown in Fig. 1 to Fig. 10, which will not be described herein again.

It should be noted that, in this document, the terms "comprises," "comprising," or any other variation thereof, are intended to cover a non-exclusive inclusion, such that a process, method, article, or device that comprises a list of elements does not comprise only those elements but can comprise other elements not expressly listed or inherent to such process, method, article, or device. Without further limitation, an element defined by the phrase "comprising an ..." does not exclude the presence of other identical elements in the process, method, article, or device that comprises the element.

Those skilled in the art will understand that all or part of the steps in the above embodiments of the method may be implemented by hardware that is related to instructions of a program, and the program may be stored in a computer-readable storage medium, such as the storage medium referred to herein as: ROM/RAM, magnetic disks, optical disks, etc.

The above description are only preferred embodiments of the present application and should not be taken as limiting the present application.

## Claims

1. A camera, comprising a light-supplementing lamp, at least two driving modules, an image sensor, a memory and a processor chip;
wherein the light-supplementing lamp comprises two light-emitting chips, each of which is connected to an output port of a corresponding driving module and is configured for emitting a light-supplementing ray, and wavelengths of light-supplementing rays emitted by the light-emitting chips are different, wherein the light-supplementing rays are red light and blue light;
an input port of the driving module is connected to an output port of the processor chip, and the driving module is configured for receiving a PWM signal sent by the processor chip and driving the connected light-emitting chip to emit a light-supplementing ray based on the PWM signal;
the image sensor is configured for sensing the light-supplementing rays emitted by the light-supplementing lamp and generating an image;
the memory is configured for storing a preset data table, wherein the data table indicates a correspondence between a preset brightness value and at least two PWM signals; and
the image sensor and the memory are connected to an input port of the processor chip, the processor chip is configured for acquiring a current image from the image sensor and acquiring the data table from the memory, if it is determined that light-supplementing brightness of the light-supplementing lamp needs to be adjusted, looking up the data table based on an actual brightness value of the current image to determine corresponding at least two new PWM signals, and outputting the at least two new PWM signals to the corresponding driving modules respectively;
wherein the at least two new PWM signals are determined by the processor chip via determining a first preset brightness by looking up the data table to determine the first preset brightness value in the data table, wherein a deviation between the first preset brightness value and the actual brightness value is less than a first preset threshold value, looking up the data table based on the first preset brightness value and determining a duty ratio of a new first PWM signal and a duty ratio of a new second PWM signal corresponding to the first preset brightness value;
wherein, the processor chip is further configured for:
looking up the data table based on PWM signals corresponding to the current image to determine a second preset brightness value in the data table;
determining that the light-supplementing brightness of the light-supplementing lamp needs to be adjusted when a deviation between the actual brightness value and the second preset brightness value is greater than a second preset threshold value;
wherein, the processor chip is configured for:
not generating new PWM signals when the deviation between the actual brightness value and the second preset brightness value is less than or equal to the second preset threshold value.

2. The camera according to claim 1, wherein the driving module comprises a driving chip, a first sampling resistor and a power source;
a first port of the driving chip is connected to the output port of the processor chip;
a second port of the driving chip is connected to the power source;
a third port of the driving chip is connected to a first end of the first sampling resistor and one light-emitting chip in the light-supplementing lamp respectively; a second end of the first sampling resistor is connected to the power source;
the driving chip is configured for outputting a current signal to the connected light-emitting chip according to the first sampling resistor and a PWM signal output by the processor chip so as to control the connected light-emitting chip to emit a light-supplementing ray with one wavelength.

## Patentansprüche

1. Kamera, die eine lichtergänzende Lampe, mindestens zwei Ansteuermodule, einen Bildsensor, einen Speicher und einen Prozessorchip umfasst;
wobei die lichtergänzende Lampe zwei lichtemittierende Chips umfasst, von denen jeder mit einem Ausgangsanschluss eines entsprechenden Ansteuermoduls verbunden und dafür konfiguriert ist, einen lichtergänzenden Strahl zu emittieren, und Wellenlängen von lichtergänzenden Strahlen, die von den lichtemittierenden Chips emittiert werden, unterschiedlich sind, wobei die lichtergänzenden Strahlen rotes Licht und blaues Licht sind;
ein Eingangsanschluss des Ansteuermoduls mit einem Ausgangsanschluss des Prozessorchips verbunden ist, und das Ansteuermodul dafür konfiguriert ist, ein PWM-Signal zu empfangen, das vom Prozessorchip gesendet wird, und den verbundenen lichtemittierenden Chip auf Grundlage des PWM-Signals so anzusteuern, dass er einen lichtergänzenden Strahl emittiert;
der Bildsensor dafür konfiguriert ist, die von der lichtergänzenden Lampe emittierten lichtergänzenden Strahlen zu erfassen und ein Bild zu erzeugen;
der Speicher dafür konfiguriert ist, eine voreingestellte Datentabelle zu speichern, wobei die Datentabelle eine Entsprechung zwischen einem voreingestellten Helligkeitswert und mindestens zwei PWM-Signalen angibt; und
der Bildsensor und der Speicher mit einem Eingangsanschluss des Prozessorchips verbunden sind, der Prozessorchip dafür konfiguriert ist, ein aktuelles Bild vom Bildsensor zu erfassen und die Datentabelle aus dem Speicher zu erfassen, wenn bestimmt wird, dass die lichtergänzende Helligkeit der lichtergänzenden Lampe angepasst werden muss, auf Grundlage eines tatsächlichen Helligkeitswerts des aktuellen Bilds in der Datentabelle nachzuschlagen, um entsprechende mindestens zwei neue PWM-Signale zu bestimmen, und die mindestens zwei neuen PWM-Signale jeweils an die entsprechenden Ansteuermodule auszugeben;
wobei die mindestens zwei neuen PWM-Signale vom Prozessorchip bestimmt werden durch Bestimmen einer ersten voreingestellten Helligkeit durch Nachschlagen in der Datentabelle, um den ersten voreingestellten Helligkeitswert in der Datentabelle zu bestimmen, wobei eine Abweichung zwischen dem ersten voreingestellten Helligkeitswert und dem tatsächlichen Helligkeitswert kleiner ist als ein erster voreingestellter Schwellenwert, Nachschlagen in der Datentabelle auf Grundlage des ersten voreingestellten Helligkeitswerts und Bestimmen eines Tastverhältnisses eines neuen ersten PWM-Signals und eines Tastverhältnisses eines neuen zweiten PWM-Signals, die dem ersten voreingestellten Helligkeitswert entsprechen;
wobei der Prozessorchip weiter dafür konfiguriert ist:
auf Grundlage von PWM-Signalen, die dem aktuellen Bild entsprechen, in der Datentabelle nachzuschlagen, um einen zweiten voreingestellten Helligkeitswert in der Datentabelle zu bestimmen;
zu bestimmen, dass die lichtergänzende Helligkeit der lichtergänzenden Lampe angepasst werden muss, wenn eine Abweichung zwischen dem tatsächlichen Helligkeitswert und dem zweiten voreingestellten Helligkeitswert größer als ein zweiter voreingestellter Schwellenwert ist;
wobei der Prozessorchip dafür konfiguriert ist:
keine neuen PWM-Signale zu erzeugen, wenn die Abweichung zwischen dem tatsächlichen Helligkeitswert und dem zweiten voreingestellten Helligkeitswert kleiner oder gleich dem zweiten voreingestellten Schwellenwert ist.

2. Kamera nach Anspruch 1, wobei das Ansteuermodul einen Ansteuerchip, einen ersten Abtastwiderstand und eine Energiequelle umfasst;
ein erster Anschluss des Ansteuerchips mit dem Ausgangsanschluss des Prozessorchips verbunden ist;
ein zweiter Anschluss des Ansteuerchips mit der Energiequelle verbunden ist;
ein dritter Anschluss des Ansteuerchips jeweils mit einem ersten Ende des ersten Abtastwiderstands und einem lichtemittierenden Chip in der lichtergänzenden Lampe verbunden ist; ein zweites Ende des ersten Abtastwiderstands mit der Energiequelle verbunden ist;
der Ansteuerchip dafür konfiguriert ist, ein Stromsignal gemäß dem ersten Abtastwiderstand und einem vom Prozessorchip ausgegebenen PWM-Signal an den verbundenen lichtemittierenden Chip auszugeben, um den verbundenen lichtemittierenden Chip so zu steuern, dass er einen lichtergänzenden Strahl mit einer Wellenlänge emittiert.

## Revendications

1. Caméra, comprenant une lampe d'appoint en lumière, au moins deux modules de pilotage, un capteur d'image, une mémoire et une puce microprocesseur ;
dans laquelle la lampe d'appoint en lumière comprend deux puces électroluminescentes, chacune d'elles est connectée à un port de sortie d'un module de pilotage correspondant et est configurée pour émettre un rayon d'appoint en lumière, et des longueurs d'onde de rayons d'appoint en lumière émis par les puces électroluminescentes sont différentes, dans laquelle les rayons d'appoint en lumière sont une lumière rouge et une lumière bleue ;
un port d'entrée du module de pilotage est connecté à un port de sortie de la puce microprocesseur, et le module de pilotage est configuré pour recevoir un signal PWM envoyé par la puce microprocesseur et piloter la puce électroluminescente connectée pour qu'elle émette un rayon d'appoint en lumière sur la base du signal PWM ;
le capteur d'image est configuré pour détecter les rayons d'appoint en lumière émis par la lampe d'appoint en lumière et générer une image ;
la mémoire est configurée pour stocker une table de données prédéfinie, dans laquelle la table de données indique une correspondance entre une valeur de luminosité prédéfinie et au moins deux signaux PWM ; et
le capteur d'image et la mémoire sont connectés à un port d'entrée de la puce microprocesseur, la puce microprocesseur est configurée pour acquérir une image courante à partir du capteur d'image et acquérir la table de données à partir de la mémoire, s'il est déterminé qu'une luminosité d'appoint en lumière de la lampe d'appoint en lumière doit être ajustée, consulter la table de données sur la base d'une valeur de luminosité réelle de l'image courante pour déterminer au moins deux nouveaux signaux PWM correspondants, et délivrer les au moins deux nouveaux signaux PWM aux modules de pilotage correspondants respectivement ;
dans laquelle les au moins deux nouveaux signaux PWM sont déterminés par la puce microprocesseur via la détermination d'une première luminosité prédéfinie en consultant la table de données pour déterminer la première valeur de luminosité prédéfinie dans la table de données, dans laquelle un écart entre la première valeur de luminosité prédéfinie et la valeur de luminosité réelle est inférieur à une première valeur seuil prédéfinie, la consultation de la table de données sur la base de la première valeur de luminosité prédéfinie et la détermination d'un facteur d'utilisation d'un nouveau premier signal PWM et d'un facteur d'utilisation d'un nouveau second signal PWM correspondant à la première valeur de luminosité prédéfinie ;
dans laquelle la puce microprocesseur est en outre configurée pour :
consulter la table de données sur la base de signaux PWM correspondant à l'image courante pour déterminer une seconde valeur de luminosité prédéfinie dans la table de données ;
déterminer que la luminosité d'appoint en lumière de la lampe d'appoint en lumière doit être ajustée lorsqu'un écart entre la valeur de luminosité réelle et la seconde valeur de luminosité prédéfinie est supérieur à une seconde valeur seuil prédéfinie ;
dans laquelle la puce microprocesseur est configurée pour :
ne pas générer de nouveaux signaux PWM lorsque l'écart entre la valeur de luminosité réelle et la seconde valeur de luminosité prédéfinie est inférieur ou égal à la seconde valeur seuil prédéfinie.

2. Caméra selon la revendication 1, dans laquelle le module de pilotage comprend une puce de pilotage, une première résistance d'échantillonnage et une source d'alimentation ;
un premier port de la puce de pilotage est connecté au port de sortie de la puce microprocesseur ;
un deuxième port de la puce de pilotage est connecté à la source d'alimentation ;
un troisième port de la puce de pilotage est connecté à une première extrémité de la première résistance d'échantillonnage et à une puce électroluminescente dans la lampe d'appoint en lumière respectivement ; une seconde extrémité de la première résistance d'échantillonnage est connectée à la source d'alimentation ;
la puce de pilotage est configurée pour délivrer un signal de courant à la puce électroluminescente connectée selon la première résistance d'échantillonnage et un signal PWM délivré par la puce microprocesseur de façon à commander la puce électroluminescente connectée pour qu'elle émette un rayon d'appoint en lumière avec une longueur d'onde.
